# EUROPÄISCHE PATENTSCHRIFT

(11) **EP 2 602 155 B1**
(45) Veröffentlichungstag und Bekanntmachung des Hinweises auf die Patenterteilung: **03.06.2015**
(21) Anmeldenummer: 12007715.1
(22) Anmeldetag: 14.11.2012
(51) Int. Cl.: B60R 7/04

(54) **Staubox**
loading box
caisson de rangement

(30) Priorität: 06.12.2011 DE 102011120158
(43) Veröffentlichungstag der Anmeldung: 12.06.2013
(73) Patentinhaber: KAMEI automotive GmbH, 38448 Wolfsburg (DE)
(72) Erfinder: Schulze, Dirk, 29378 Wittingen (DE)
(74) Vertreter: Friedrich, Andreas

(56) Entgegenhaltungen:
- EP-A1- 2 332 779
- DE-A1- 10 151 704
- DE-A1-102005 055 138
- DE-C1- 10 164 340

## Beschreibung

Die Erfindung betrifft eine Staubox zum Anordnen in einem Kraftfahrzeug.

Insbesondere in Einsatzfahrzeugen beispielsweise von Polizei, Feuerwehr und Rettungsdiensten, aber auch in Fahrzeugen von Handwerkern oder Baustellenfahrzeugen wird heute eine Vielzahl unterschiedlicher Gegenstände mitgeführt. Dies können beispielsweise Werkzeuge, Helme, Schreibutensilien und Datenverarbeitungsgeräte, wie beispielsweise Laptops, sein. Insbesondere im Fall von Einsatzfahrzeugen werden jedoch beispielsweise auch Handfeuerwaffen mitgeführt. Alle diese Gegenstände müssen dabei im Innenraum des Kraftfahrzeuges so verstaut werden, dass sie beispielsweise im Fall eines Unfalls des jeweiligen Kraftfahrzeuges nicht zu einer Gefährdung der Insassen des Fahrzeugs werden. Zudem sollten die Gegenstände so verstaut werden, dass es während der Fahrt, beispielsweise durch Unebenheiten der Straße oder sonstige Erschütterungen, nicht zu einer Geräuschentwicklung beispielsweise in Form eines Klapperns kommt. Gleichzeitig müssen insbesondere in Einsatzfahrzeugen die jeweiligen Gegenstände so verstaut werden, dass sie im Einsatzfall leicht und schnell erreichbar sind. Dafür ist es beispielsweise bekannt, in Nutzfahrzeugen zwischen dem Fahrer- und dem Beifahrersitz eine Staubox vorzusehen, die mit einem aufklappbaren, abschließbaren Deckel versehen ist. Eine derartige Mittelbox wird am Fahrzeugboden des Kraftfahrzeugs festgeschraubt und bietet somit eine sichere Verstaumöglichkeit für die jeweiligen benötigten Gegenstände. Gleichzeitig ist die Mittelbox so angeordnet, dass sie leicht bedienbar ist und Gegenstände aus ihr schnell und einfach entnommen werden können.

Je nach Einsatzfahrt ist es möglich, dass sich in dem jeweiligen Einsatzfahrzeug eine unterschiedliche Anzahl von Personen befindet. Befindet sich beispielsweise neben dem Fahrer des Kraftfahrzeuges auch ein Beifahrer im Fahrzeug, ist es zweckmäßig, dass dieser, um die Konzentration des Fahrers auf die Straße und den ihn umgebenden Verkehr nicht zu stören, die Staubox bedient und die benötigten Gegenstände aus ihr entfernt bzw. in sie hineinlegt. Daher ist es in diesem Fall sinnvoll, dass der Deckel der Staubox so aufklappt, dass er den Beifahrer beim Hineingreifen in die Staubox nicht im Weg ist. Es ist beispielsweise denkbar, dass er an der an dem Fahrersitz zugewandten Seite schwenkbar gelagert ist, so dass der Beifahrer des Kraftfahrzeugs bei geöffnetem Deckel ungehindert Zugriff auf den Innenraum der Staubox hat.

Befindet sich jedoch nur der Fahrer im Kraftfahrzeug, ist diese Art der schwenkbaren Lagerung des Deckels nachteilig. Will nämlich der Fahrer in eine derartige Staubox eingreifen, muss er um den aufgeklappten Deckel herum oder über ihn hinweg greifen, um einen Gegenstand aus der Staubox herauszunehmen bzw. in sie hereinzulegen. Insbesondere wenn schnelles Handeln erforderlich ist, was beispielsweise bei Einsatzfahrzeugen von Polizei, Feuerwehr und Rettungsdiensten der Fall sein kann, ist dies nachteilig.

Zudem ist es denkbar, dass auch auf der Rückbank des jeweiligen Kraftfahrzeuges Personen sitzen, die ungehinderten Zugriff auf die Staubox haben müssen. In diesem Fall wäre es sinnvoll, den Deckel nach vorne aufklappen zu lassen, so dass er den auf der Rückbank befindlichen Personen nicht im Weg ist.

Aus der DE 10 2005 055 138 A1, der DE 101 64 340 C1 sowie der DE 101 51 704 A1 sind jeweils Behälter bekannt, die beispielsweise in der Mittelkonsole eines Kraftfahrzeugs angeordnet werden können. Diese Behälter verfügen über einen Deckel, der gegenüber dem Rest des Behälters verschwenkbar ausgebildet ist. Dabei sind zwei voneinander beabstandete parallel Schwenkachsen vorgesehen, die wahlweise ausgewählt werden können, so dass der Deckel entweder in Richtung auf die Fahrerseite des Kraftfahrzeugs oder in Richtung auf die Beifahrerseite des Kraftfahrzeugs verschwenkt werden kann. Damit soll erreicht werden, dass sowohl dem Fahrer als auch dem Beifahrer auf einfache Weise Zugang zum Inhalt des Staufaches innerhalb des Behälters gewährt werden kann.

Der Erfindung liegt somit die Aufgabe zugrunde, eine Staubox zum Anordnen in einem Kraftfahrzeug vorzuschlagen, die flexibel auf die jeweiligen Bedürfnisse umrüst- und anwendbar ist.

Die Erfindung löst die gestellte Aufgabe durch eine Staubox zum Anordnen in einem Kraftfahrzeug, wobei die Staubox ein Bodenelement zum Befestigen in einem Innenraum des Kraftfahrzeuges, einen Grundkörper zum Befestigen an dem Bodenelement und ein Deckelelement zum Befestigen an dem Grundkörper umfasst, das eine Deckelplatte aufweist, die relativ zu dem Grundkörper schwenkbar gelagert ist, wenn das Deckelelement an dem Grundkörper befestigt ist, wobei der Grundkörper an dem Bodenelement und/oder das Deckelelement an dem Grundkörper in zumindest einer ersten Orientierung und einer davon verschiedenen zweiten Orientierung befestigbar ist. Auf diese Weise ist es möglich, das Bodenelement, den Grundkörper und das Deckelelement so zu kombinieren, dass die Deckelplatte des Deckelelementes zu der jeweils gewünschten Richtung schwenkbar ist und somit in diese Richtung geöffnet werden kann. Damit werden die genannten Nachteile aus dem Stand der Technik behoben und immer ein freier Zugriff der jeweils gewünschten Person in dem Innenraum des Kraftfahrzeuges auf den Innenraum der Staubox gewährleistet. Es ist zudem nicht mehr nötig, für unterschiedliche gewünschte Öffnungsrichtungen der Deckelplatte unterschiedliche Stauboxen vorzuhalten. Dadurch werden der Fertigungs- und Lagerhaltungsaufwand und damit auch der Kostenaufwand bei der Herstellung der Stauboxen deutlich reduziert.

Um dies zu erreichen, stehen erfindungsgemäß unterschiedliche Möglichkeiten offen. In einer Ausgestaltung einer erfindungsgemäßen Staubox sind das Deckelelement und der Grundkörper nur in einer einzigen Orientierung aneinander befestigbar. In diesem Fall ist jedoch der Grundkörper an dem Bodenelement in zwei unterschiedlichen Orientierungen befestigbar, so dass hier eine Einstellmöglichkeit der Richtung vorliegt, in die die Deckelplatte schwenkbar ist. Alternativ dazu kann auch der Grundkörper in nur einer einzigen Orientierung an dem Bodenelement angeordnet werden. In diesem Fall ist jedoch das Deckelelement in den beiden unterschiedlichen Orientierungen am Grundkörper befestigbar. Auch auf diese Weise entsteht die gewünschte Einstellmöglichkeit der Schwenkrichtung, in der die Deckelplatte relativ zum Grundkörper verschwenkbar ist. Natürlich ist es auch denkbar, Bodenelement, Grundkörper und Deckelelement so auszubilden, dass sowohl der Grundkörper an dem Bodenelement als auch das Deckelelement an dem Grundkörper in jeweils zwei unterschiedlichen Orientierungen angeordnet werden kann. Bei speziellen Ausgestaltungen der einzelnen Bauteile ist es sogar möglich, mehr als die beiden unterschiedlichen Orientierungen vorzusehen. Dies kann beispielsweise gewährleistet werden, indem die Grundfläche des Bodenelementes, des Grundkörpers und des Deckelelementes quadratisch oder rund ausgebildet ist oder eine sonstige Form aufweist, die eine mehr als zweizählige Symmetrie aufweist.

In einer besonders bevorzugten Ausgestaltung ist der Grundkörper an den Bodenelement und/oder das Deckelelement an den Grundkörper lösbar befestigt. Dabei bietet sich an, dass jeweils die Befestigungen lösbar sind, die in mehreren Orientierungen vorliegen können. Ist also beispielsweise der Grundkörper an dem Bodenelement in wenigstens zwei unterschiedlichen Orientierungen befestigbar, ist es von Vorteil, wenn auch der Grundkörper an dem Bodenelement lösbar befestigbar ist. Gleiches gilt für die Verbindung zwischen Deckelelement und dem Grundkörper. Sind hier wenigstens zwei unterschiedliche Orientierungen möglich, sollte vorteilhafterweise auch die Befestigung lösbar sein. Auf diese Weise ist es einfach möglich, die Staubox beispielsweise vor Beginn einer Fahrt mit dem jeweiligen Kraftfahrzeug, in dem die Staubox angeordnet ist, von einer Orientierung in eine andere gewünschte Orientierung umzurüsten. Dies ist beispielsweise dann sinnvoll, wenn die Anzahl der Personen, die sich im Fahrzeug befinden, sich von einer Fahrt zur nächsten ändert und daher ein ungehinderter Zugriff auf die Staubbox aus einer anderen Richtung gewünscht ist.

Eine derartige lösbare Befestigung kann beispielsweise in Form einer Schraubverbindung oder ähnlichem bestehen. Auf diese Weise ist mittels einfacher Handgriffe mit dem geeigneten Werkzeug die jeweilige Befestigung einfach zu lösen. Alternativ oder zusätzlich dazu können auch Klipp- und Schnappverbindungen vorgesehen sein. Natürlich ist auch jede andere Form der lösbaren Befestigung denkbar.

Es hat sich als vorteilhaft herausgestellt, wenn die erste Orientierung und die zweite Orientierung um 180° Grad zueinander um eine Drehachse gedreht sind, die sich von dem Bodenelement zu dem Deckelelement erstreckt. Dadurch wird gewährleistet, dass beispielsweise die Deckelplatte des Deckelelementes in der ersten Orientierung zur einen Seite und in der zweiten Orientierung zur gegenüber liegenden Seite hin verschwenkt und damit geöffnet werden kann. Eine derartige Ausgestaltung der Staubox ist durch relativ einfache Formen, beispielsweise einen rechteckigen Querschnitt des Grundkörpers, des Bodenelementes und des Deckelelementes zu erreichen.

Bevorzugt weist die Staubox einen Halteeinsatz zum Halten wenigstens eines in der Staubox zu verstauenden Gegenstandes auf. Auf diese Weise kann gewährleistet werden, dass die Gegenstände, die in der Staubox aufzunehmen sind, in einen dazu passenden Halteeinsatz eingesetzt werden können, so dass sie sicher und stabil auch während der Fahrt in der Staubox gehalten werden können. Dadurch wird einerseits eine störende Geräuschentwicklung durch Klappern verhindert und gleichzeitig eine Beschädigung der in der Staubox zu verstauenden Gegenstände verhindert. Dies ist insbesondere bei teuren oder empfindlichen Gegenständen, wie beispielsweise Laptops oder empfindlichen Messinstrumenten von Vorteil. Gleichzeitig kann der Halteeinsatz so ausgebildet sein, dass die zu verstauenden Gegenstände, beispielsweise Schusswaffen, so in der Staubox zu verstauen sind, dass sie einfach und schnell durch die Öffnung der Staubox greifbar sind, so dass auch durch diese Ausgestaltung der Zugriff auf die verstauten Gegenstände erleichtert und vereinfacht wird.

Der Halteeinsatz kann dabei als separates Bauteil ausgebildet sein, das beispielsweise an dem Grundkörper oder dem Bodenelement der Staubox befestigt werden kann. Alternativ dazu kann der Halteeinsatz auch einstückig mit dem Bodenelement oder dem Grundkörper ausgebildet sein. Insbesondere bei der Befestigung an dem Bodenelement bzw. der einstückigen Ausbildung mit dem Bodenelement ist gewährleistet, dass auch wenn der Grundkörper bzw. das Deckelelement von der ersten Orientierung in die zweite Orientierung oder umgekehrt gebracht wird, der Halteeinsatz seine Position und Ausrichtung nicht ändert. Damit wird gewährleistet, dass ein Gegenstand, der in den Halteeinsatz eingesetzt ist und von diesem Halteeinsatz gehalten wird, ebenfalls seine Orientierung und Position in der Staubox nicht ändert. Dies ist insbesondere dann von Vorteil, wenn beispielsweise Schusswaffen in der Staubox verwahrt würden, die in einer bestimmten Richtung verstaut und in dieser auch gegriffen werden müssen. Indem der Grundkörper oder das Deckelelement von der ersten Orientierung in die zweite Orientierung gebracht wird, wird die Schwenkrichtung der Deckelplatte relativ zum Grundkörper zwar geändert, die Ausrichtung und Positionierung der gelagerten Waffe bleibt jedoch gleich, so dass ein sicheres Greifen der Waffe durch die Personen im Kraftfahrzeug gewährleistet bleibt.

Besonders bevorzugt ist der Halteeinsatz ausgebildet, um zwei Handfeuerwaffen zu halten. Zusätzlich können Halteelemente für Magazine oder Munition sowie für sonstige Geräte vorgesehen sein.

In einer bevorzugten Ausgestaltung ist an der Deckelplatte der Staubox ein Schloss angeordnet, mit dem die Staubox abschließbar ist. Dies ist insbesondere dann von Vorteil, wenn ein Zugriff durch andere Personen sicher verhindert werden soll, auch wenn das Fahrzeug beispielsweise im geöffneten Zustand längere Zeit abgestellt wird. Dies kann beispielsweise bei Einsatzfahrzeugen während eines Einsatzes geschehen, während dessen die gesamte Aufmerksamkeit der Person, die mit dem Fahrzeug unterwegs sind, auf den Einsatz und den gegebenenfalls folgenden Notfall gerichtet sind. Das Fahrzeug bleibt in aufgeschlossenem Zustand stehen, so dass ein Zugriff auf teure oder sensible Geräte möglich wäre. Natürlich sollte darauf geachtet werden, dass bei einer abschließbaren Staubox die Befestigung zwischen der Deckelplatte und dem Grundkörper bzw. zwischen dem Grundkörper und dem Bodenelement nicht zu leicht lösbar ist. Hier bietet sich an, ein spezielles Werkzeug vorzusehen, das beispielsweise an zentraler Position wie z. B. einer Feuerwache oder der Garage gelagert wird.

Mit Hilfe einer Zeichnung wird nachfolgend ein Ausführungsbeispiel der vorliegenden Erfindung näher erläutert. Es zeigen
- Figur 1: - eine Staubox gemäß einem ersten Ausführungsbeispiel der vorliegenden Erfindung im geschlossenen Zustand,
- Figur 2: - die Staubox aus Figur 1 im geöffneten Zustand,
- Figur 3: - die Staubox aus den Figuren 1 und 2 in einer Explosionsdarstellung.

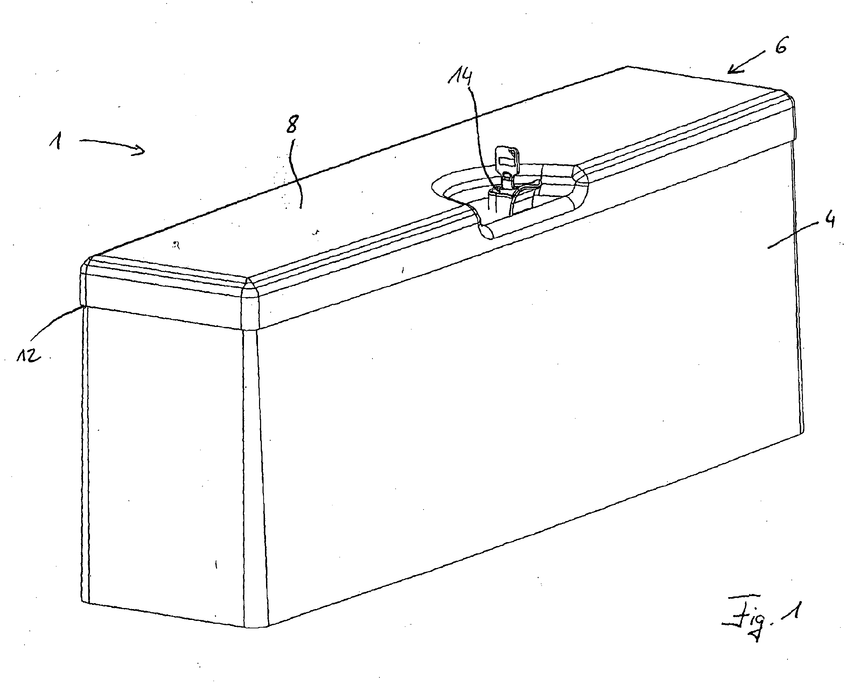

Figur 1 zeigt eine Staubox 1 gemäß einem Ausführungsbeispiel der vorliegenden Erfindung. Diese umfasst ein in Figur 1 nicht gezeigtes Bodenelement 2, einen Grundkörper 4 sowie ein Deckelelement 6. Das Deckelelement 6 ist an dem Grundkörper 4 angeordnet. Es umfasst eine Deckelplatte 8, durch die eine Öffnung 10 im Grundkörper 4, die in Figur 1 nicht dargestellt ist, vollständig abgedeckt wird. Die Deckelplatte 8 ist über ein Gelenk 12, das beispielsweise als Scharnier ausgebildet sein kann, am Grundkörper 4 angeordnet, so dass die Deckelplatte 8 relativ zum Grundkörper 4 schwenkbar ist.

Am Deckelelement 6 befindet sich ein Schloss 14, mit dem die Staubox 1 abschließbar ist.

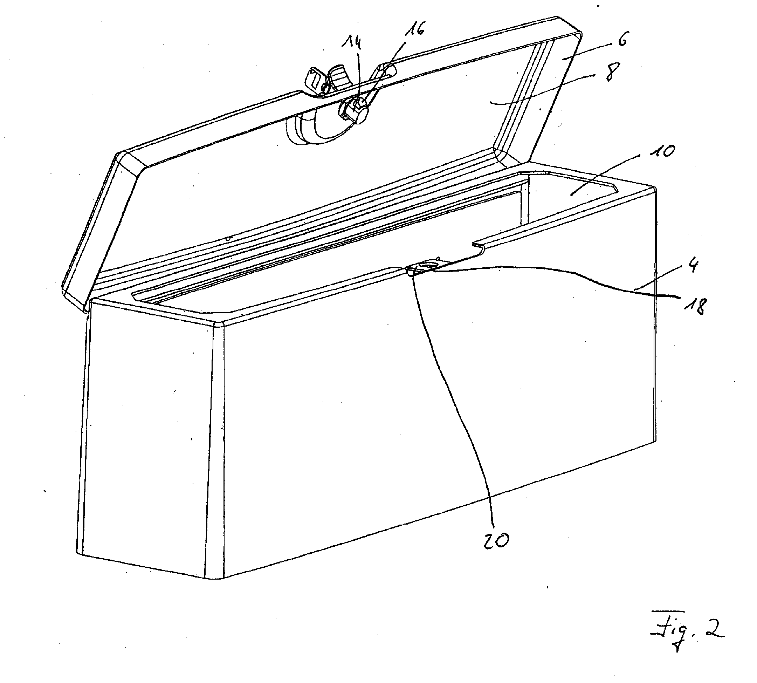

Figur 2 zeigt die Staubox 1 aus Figur 1 im geöffneten Zustand. Man erkennt die Öffnung 10 in einer Oberseite des Grundkörpers 4, durch die Gegenstände in die Staubox hineingelegt bzw. aus ihr herausgeholt werden können. Am Deckelelement 6 befindet sich die Deckelplatte 8, die nun relativ zum Grundkörper 4 verschwenkt ist. Man erkennt das Schloss 14, das über eine Schließlippe 16 verfügt, die durch eine dafür vorgesehene Öffnung 18 hindurch geführt wird und hinter ein Schließblech 20 schnappt.

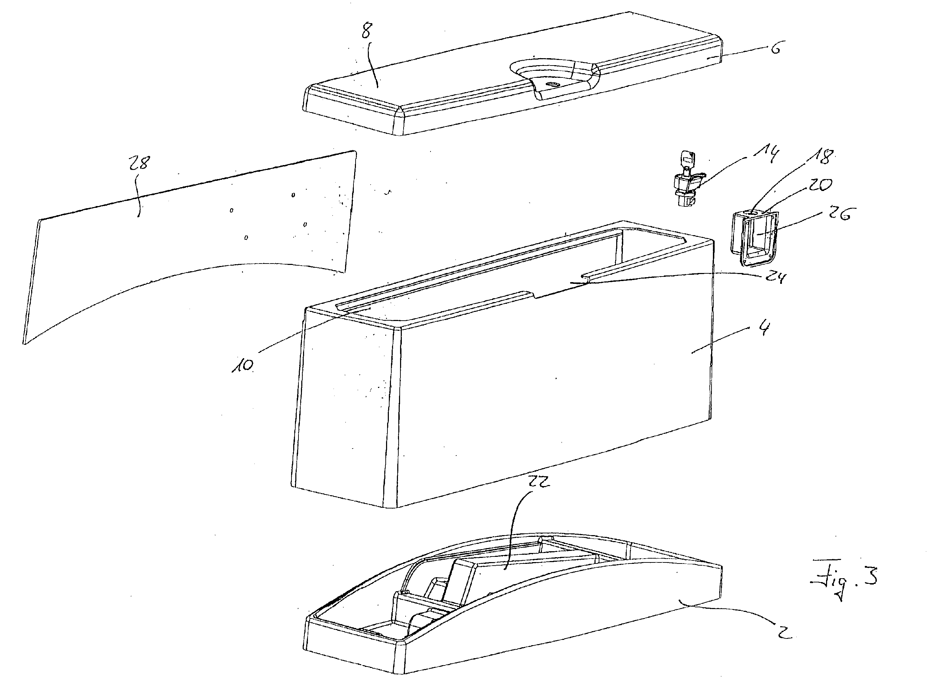

Figur 3 zeigt die Staubox 1 in einer Explosionsdarstellung. Man erkennt das Bodenelement 2, mit dem einstückig ein Halteeinsatz 22 ausgebildet ist, der ausgebildet ist, um im gezeigten Ausführungsbeispiel zwei Handfeuerwaffen sicher und stabil zu lagern.

Das Bodenelement 2 wird an einem Bodenblech des Kraftfahrzeuges angeordnet. Durch die im Wesentlichen rechteckige Grundform des Bodenelementes 2 und die entsprechende Anpassung der Form des Grundkörpers 4 ist es möglich, diesen sowohl in der gezeigten Orientierung als auch in einer um 180° Grad gedrehten Orientierung am Bodenelement 2 zu befestigen. Das Deckelelement 6 mit der Deckelplatte 8 kann im in Figur 3 gezeigten Ausführungsbeispiel nur in einer Orientierung, nämlich der in Figur 3 gezeigten Orientierung, an dem Grundkörper 4 befestigt werden. Man erkennt, dass am Rand der Öffnung 10 des Grundkörpers 4 eine Ausparung 24 vorgesehen ist, die für einen Einsatz des Schlosses 14 und eine Befestigung einer Schlossfalle 26 vorgesehen ist. An der Oberseite der Schlossfalle 26 befindet sich das Schließblech 20 mit der Öffnung 18.

Wird nun der Grundkörper 4 nicht in der gezeigten sondern in einer um 180° Grad gedrehten zweiten Orientierung mit dem Bodenelement 2 verbunden, wird gleichzeitig auch das Deckelelement 6 um 180° Grad um die gleiche Achse gedreht, die sich in Figur 3 von unten nach oben erstrecken würde. Dadurch wird gewährleistet, dass das Deckelelement 6 und der Grundkörper 4 aneinander befestigt werden können. Gleichzeitig wird dadurch die Schwenkrichtung der Deckelplatte 8 relativ zum Bodenelement 2 verändert. Anstatt, wie in der Figur 2 gezeigt, nach hinten, lässt sich das Deckelelement 6 dann nach vorne aufklappen, so dass ein uneingeschränkter Zugriff auf den Innenraum der Staubox durch die Öffnung 10 von der jeweils anderen Seite möglich ist.

In Figur 3 ist zudem eine Verstärkungsplatte 28 gezeigt, die von Innen an einer Seitenwand des Grundkörpers 4 angeordnet wird, um hier für mehr Stabilität zu sorgen. Dies ist insbesondere dann von Vorteil, wenn die Staubox 1 beispielsweise an einer Seitenwand des Kraftfahrzeuges zusätzlich befestigt werden soll oder besonders schwere Geräte in der Staubox transportiert werden sollen. Die Verstärkungsplatte 28 wird vorzugsweise von innen an dem Grundkörper 4 angeordnet. Sie kann als Stütz- und Halteelement für eine Halterung dienen, mit der beispielsweise ein Feuerlöscher und/oder eine Feuerwehraxt an der Außenseite des Grundkörpers 4 angeordnet und sicher gehalten werden kann.

Eine erfindungsgemäße Staubox 1 ist folglich sehr flexibel einsetzbar. Je nach gewünschter Schwenkrichtung der Deckelplatte 8 relativ zum Grundkörper 4 kann die Staubox 1 auf unterschiedlichste Anforderungen angepasst werden. Gleichzeitig muss nicht für jede gewünschte Ausrichtung der Deckelplatte 8 eine separate Staubox 1 vorgehalten werden, so dass sowohl die Anschaffungs- als auch die Lager- und Herstellungskosten deutlich reduziert werden. Zudem ist es möglich, den Grundkörper 4 sowohl an das Kraftfahrzeug, in dem die Staubox 1 verwendet werden soll, als auch über den am Grundkörper 4 befindlichen Halteeinsatz 22 an die aufzunehmenden Geräte anzupassen. Für Stauboxen 1 in unterschiedlichen Kraftfahrzeugen bzw. für unterschiedliche Geräte und Gegenstände müssen folglich lediglich andere Bodenelemente 2 vorgesehen werden, während die übrigen Bauteile, insbesondere der Grundkörper 4 und das Deckelelement 6, für alle Kraftfahrzeugtypen und aufzubewahrenden Gegenstände identisch ausgebildet sein können. Auch dadurch werden die Herstellungs- und insbesondere die Lagerhaltungskosten deutlich reduziert.

### Bezugszeichenliste

- 1: Staubox
- 2: Bodenelement
- 4: Grundkörper
- 6: Deckelelement
- 8: Deckelplatte
- 10: Öffnung
- 12: Gelenk
- 14: Schloss
- 16: Schließlippe
- 18: Öffnung
- 20: Schließblech
- 22: Halteeinsatz
- 24: Aussparung
- 26: Schlossfalle
- 28: Verstärkungsplatte

## Patentansprüche

1. Staubox (1) zum Anordnen in einem Kraftfahrzeug, wobei die Staubox (1)
- ein Bodenelement (2) zur Befestigung in einem Innenraum des Kraftfahrzeuges
- einen Grundkörper (4) zum Befestigen an dem Bodenelement (2) und
- ein Deckelelement (6) zum Befestigen an dem Grundkörper (4) umfasst,
das eine Deckelplatte aufweist, die relativ zu dem Grundkörper (4) schwenkbar gelagert ist, wenn das Deckelelement (6) an dem Grundkörper (4) befestigt ist,
wobei der Grundkörper (4) an dem Bodenelement (2) und/oder das Deckelelement (6) an dem Grundkörper (4) in zumindest einer ersten Orientierung und einer davon verschiedenen zweiten Orientierung befestigbar ist.

2. Staubox (1) nach Anspruch 1, **dadurch gekennzeichnet, dass** der Grundkörper (4) an dem Bodenelement (2) und/oder das Deckelelement (6) an dem Grundkörper (4) lösbar befestigbar sind.

3. Staubox (1) nach Anspruch 1 oder 2, **dadurch gekennzeichnet, dass** die erste Orientierung und die zweite Orientierung um 180° Grad zueinander um eine Drehachse gedreht sind, die sich von dem Bodenelement (2) zu dem Deckelelement (6) erstreckt.

4. Staubox (1) nach einem der vorstehenden Ansprüche, **dadurch gekennzeichnet, dass** die Staubox (1) einen Halteeinsatz (22) zum Halten wenigstens eines in der Staubox (1) zu verstauenden Gegenstandes aufweist.

5. Staubox (1) nach Anspruch 4, **dadurch gekennzeichnet, dass** der Halteeinsatz (22) als separates Bauteil ausgebildet ist.

6. Staubox (1) nach Anspruch 5, **dadurch gekennzeichnet, dass** der Halteeinsatz (22) an dem Grundkörper (4) befestigt ist.

7. Staubox (1) nach Anspruch 5, **dadurch gekennzeichnet, dass** der Halteeinsatz (22) an dem Bodenelement (2) befestigt ist.

8. Staubox (1) nach Anspruch 4, **dadurch gekennzeichnet, dass** der Halteeinsatz einstückig mit dem Bodenelement (2) oder dem Grundkörper (4) ausgebildet ist.

9. Staubox (1) nach einem der Ansprüche 4 bis 8, **dadurch gekennzeichnet, dass** der Halteeinsatz (22) ausgebildet ist, um zumindest zwei Handfeuerwaffen zu halten.

10. Staubox (1) nach einem der vorstehenden Ansprüche, **dadurch gekennzeichnet, dass** an der Deckelplatte (8) ein Schloss (14) angeordnet ist, mit dem die Staubox (1) abschließbar ist.

## Claims

1. Stowage box (1) for arranging in a motor vehicle, wherein the stowage box (1) comprises
- a base element (2) for fastening in an interior of the motor vehicle,
- a main body (4) for fastening to the base element (2) and
- a cover element (6) for fastening to the main body (4),
said cover element having a cover plate which is mounted pivotably relative to the main body (4) when the cover element (6) is fastened to the main body (4),
wherein the main body (4) is fastenable to the base element (2) and/or the cover element (6) is fastenable to the main body (4) in at least one first orientation and a second orientation which is different therefrom.

2. Stowage box (1) according to Claim 1, **characterized in that** the main body (4) is fastenable releasably to the base element (2) and/or the cover element (6) is fastenable releasably to the main body (4).

3. Stowage box (1) according to Claim 1 or 2, **characterized in that** the first orientation and the second orientation are rotated by 180° with respect to each other about an axis of rotation which extends from the base element (2) to the cover element (6).

4. Stowage box (1) according to one of the preceding claims, **characterized in that** the stowage box (1) has a holding insert (22) for holding at least one object to be stowed in the stowage box (1).

5. Stowage box (1) according to Claim 4, **characterized in that** the holding insert (22) is designed as a separate component.

6. Stowage box (1) according to Claim 5, **characterized in that** the holding insert (22) is fastened to the main body (4).

7. Stowage box (1) according to Claim 5, **characterized in that** the holding insert (22) is fastened to the base element (2).

8. Stowage box (1) according to Claim 4, **characterized in that** the holding insert is formed integrally with the base element (2) or the main body (4).

9. Stowage box (1) according to one of Claims 4 to 8, **characterized in that** the holding insert (22) is designed in order to hold at least two handguns.

10. Stowage box (1) according to one of the preceding claims, **characterized in that** a lock (14) with which the stowage box (1) is lockable is arranged on the cover plate (8).

## Revendications

1. Boîte de rangement (1) destinée à être agencée dans un véhicule automobile, ladite boîte de rangement (1) comprenant
- un élément de fond (2) pour la fixation dans un espace intérieur du véhicule automobile
- un corps de base (4) pour la fixation sur l'élément de fond (2) et
- un élément de couvercle (6) pour la fixation sur le corps de base (4), qui comprend une plaque de couvercle qui est montée en pivotement par rapport au corps de base (4) quand l'élément de couvercle (6) est fixé sur le corps de base (4),
dans laquelle le corps de base (4) est susceptible d'être fixé sur l'élément de fond (2) et/ou l'élément de couvercle (6) est susceptible d'être fixé sur le corps de base (4) dans au moins une première orientation et une seconde orientation différente de celle-ci.

2. Boîte de rangement (1) selon la revendication 1, **caractérisée en ce que** le corps de base (4) est susceptible d'être fixé de façon détachable sur l'élément de fond (2) et/ou l'élément de couvercle (6) est susceptible d'être fixé de façon détachable sur le corps de base (4).

3. Boîte de rangement (1) selon la revendication 1 ou 2, **caractérisée en ce que** la première orientation et la seconde orientation sont tournées l'une par rapport à l'autre de 180° autour d'un axe de rotation qui s'étend depuis l'élément de fond (2) vers l'élément de couvercle (6).

4. Boîte de rangement (1) selon l'une des revendications précédentes, **caractérisée en ce que** la boîte de rangement (1) comprend un insert de maintien (22) pour maintenir au moins un objet à ranger dans la boîte de rangement (1).

5. Boîte de rangement (1) selon la revendication 4, **caractérisée en ce que** l'insert de maintien (22) est réalisé sous forme de composant séparé.

6. Boîte de rangement (1) selon la revendication 5, **caractérisée en ce que** l'insert de maintien (22) est fixé sur le corps de base (4).

7. Boîte de rangement (1) selon la revendication 5, **caractérisée en ce que** l'insert de maintien (22) est fixé sur l'élément de fond (2).

8. Boîte de rangement (1) selon la revendication 4, **caractérisée en ce que** l'insert de maintien est réalisé d'un seul tenant avec l'élément de fond (2) ou avec le corps de base (4).

9. Boîte de rangement (1) selon l'une des revendications 4 à 8, **caractérisée en ce que** l'insert de maintien (22) est réalisée pour maintenir au moins deux armes à feu à main.

10. Boîte de rangement (1) selon l'une des revendications précédentes, **caractérisée en ce qu'**une serrure (14) est agencée sur la plaque de couvercle (8), serrure au moyen de laquelle la boîte de rangement (1) peut être condamnée.
